# FASCICULE DE BREVET EUROPEEN

(11) **EP 0 668 040 B1**
(45) Date de publication et mention de la délivrance du brevet: **28.10.1998**
(21) Numéro de dépôt: 95400283.8
(22) Date de dépôt: 10.02.1995
(51) Int. Cl.: A47J 36/02

(54) **Récipient culinaire à fond renforcé et son procédé de fabrication**
Kochgefäss mit verstärktem Boden und dessen Herstellung
Cooking vessel with bottom reinforcement and the manufacturing thereof

(30) Priorité: 15.02.1994 FR 9401711
(43) Date de publication de la demande: 23.08.1995
(73) Titulaire: SEB S.A., 69130 Ecully (FR)
(72) Inventeur: Coissard, Georges, F-74150 Rumilly (FR)
(74) Mandataire: Keib, Gérard

(56) Documents cités:
- EP-A- 0 509 860
- EP-A- 0 613 647
- WO-A-87/04911
- CH-A- 132 266

## Description

La présente invention concerne un récipient culinaire réalisé à partir de deux feuilles de métaux ou d'alliages différents, colaminées l'une sur l'autre et embouties de façon à créer un récipient présentant un fond et une paroi latérale.

L'invention vise également le procédé de fabrication d'un tel récipient.

La feuille intérieure est généralement en aluminium, tandis que la feuille extérieure est généralement en acier inoxydable.

Le fait que la feuille d'aluminium soit recouverte extérieurement par une feuille en acier inoxydable, présente de nombreux avantages, en particulier une amélioration de l'esthétique et une plus grande facilité de nettoyage.

Toutefois, compte tenu, notamment des différences entre les coefficients de dilatation des deux feuilles, la liaison par colaminage entre ces dernières peut se détériorer au cours du temps sur le fond de l'article sous l'effet notamment des fortes contraintes mécaniques et thermiques auxquelles sont soumis les ustensiles de cuisson.

On connaît par le document WO 87/04911 un procédé dans lequel un fond constitué d'une plaque d'aluminium et d'une plaque d'acier inoxydable est rapporté sur le fond d'un ustensile culinaire embouti préalablement afin d'améliorer la conductivité thermique du fond.

En outre, des cavités de forme déterminée sont prévues sur ce fond également pour accroître la conductivité thermique du fond du récipient.

Le problème à la base de la présente invention est non d'améliorer la conductivité thermique du fond du récipient mais de renforcer la liaison par colaminage des deux feuilles de métaux ou d'alliages différents.

L'invention vise ainsi un procédé pour réaliser un récipient culinaire, dans lequel on emboutit un disque constitué par deux feuilles de métaux ou d'alliages différents colaminées, de façon à être en contact direct l'une avec l'autre.

Suivant l'invention, ce procédé est caractérisé en ce qu'on réalise sur un disque par frappe à froid dans la zone correspondant au fond extérieur du récipient, une série de petites cavités suffisamment profondes pour créer également dans la feuille intérieure des cavités complémentaires dans lesquelles s'engagent les protubérances embouties dans la feuille extérieure, après quoi on emboutit le disque pour lui donner la forme du récipient.

On réalise ainsi une liaison mécanique entre les deux feuilles colaminées par interpénétration de cavités embouties complémentaires qui renforce non seulement la liaison entre les deux feuilles, mais également la résistance à la déformation du récipient sous l'effet des cycles répétés de chauffage et de refroidissement.

L'invention vise également un récipient culinaire obtenu par le procédé précité.

Ce récipient est réalisé à partir de deux feuilles de métaux ou d'alliages différents, colaminées l'une sur l'autre et embouties de façon à créer un récipient présentant un fond et une paroi latérale, ledit fond comportant une série de petites cavités embouties, de telle sorte que les cavités créées dans la feuille extérieure pénètrent dans des cavités complémentaires ménagées dans la feuille intérieure.

D'autres particularités et avantages de l'invention apparaîtront encore dans la description ci-après.

Aux dessins annexés, donnés à titre d'exemples non limitatifs :
- la figure 1 est une vue en coupe diamétrale d'un récipient culinaire conforme à l'invention ;
- la figure 2 est une vue à échelle agrandie du détail A de la figure 1 ;
- la figure 3 est une vue du dessous récipient représenté à la figure 1.

En référence aux figures annexées, le récipient culinaire tel que poêle est réalisé à partir de deux feuilles 1, 2 de métaux ou d'alliages différents, colaminées l'une sur l'autre et embouties de façon à créer un récipient présentant un fond 3 et une paroi latérale 4.

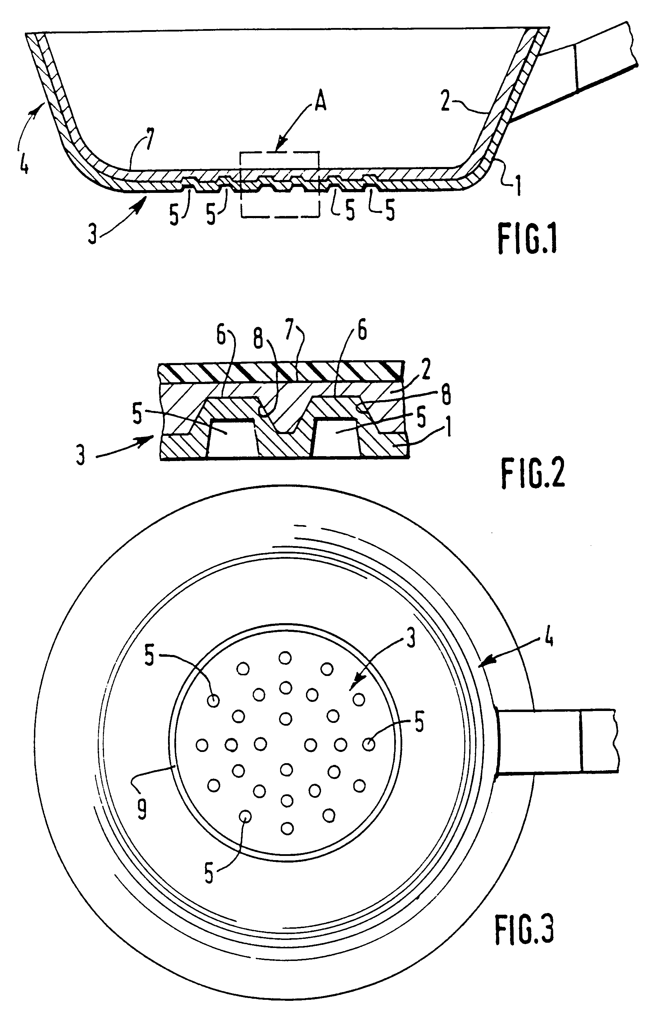

Conformément à l'invention, le fond 3 comporte une série de petites cavités 5 réalisées par frappe à froid, de telle sorte que les cavités 5 créées dans la feuille extérieure 1 pénètrent (voir figure 2) dans des cavités complémentaires 6 ménagées dans la feuille intérieure 2.

Dans la réalisation représentée sur les figures 1 et 2, la feuille intérieure 2 est plus épaisse que la feuille extérieure 1.

De préférence, la feuille intérieure 2 est en métal ou alliage plus mou que celui de la feuille extérieure 1.

A titre d'exemple, la feuille intérieure 2 est en aluminium et la feuille extérieure 1 est en acier inoxydable.

Dans l'exemple représenté, la surface intérieure 7 du fond 3 de la feuille intérieure 2 est sensiblement plate et lisse, tandis que sa surface extérieure en contact avec la feuille 1, comporte des cavités 6 dans lesquelles s'engagent des protubérances complémentaires 8 formées lors de l'emboutissage des cavités 5, dans la feuille extérieure 1.

Comme on le voit sur les figures 1 et 3, les cavités 5 embouties par frappe à froid sont situées dans une zone centrale du fond 3 du récipient.

Par ailleurs, les cavités 5 embouties ont une forme sensiblement cylindrique ou tronconique.

Le fond 3 peut également comporter une ou plusieurs cavités 9 embouties présentant une forme annulaire et/ou des cavités embouties ayant la forme de lettres, de chiffres ou de symboles.

Pour fabriquer un récipient culinaire conforme à l'invention, on emboutit un disque constitué par deux feuilles 1, 2 de métaux ou d'alliages différents colaminées.

Suivant l'invention, on réalise sur le disque par frappe à froid dans la zone correspondant au fond 3 extérieur du récipient une série de petites cavités 5 suffisamment profondes pour créer également dans la feuille intérieure 2 de cavités complémentaires dans lesquelles s'engagent les protubérances 6 embouties dans la feuille extérieure 1. On emboutit ensuite le disque pour lui donner la forme du récipient.

L'interpénétration de cavités dans les feuilles 1 et 2 permet de créer entre celles-ci, dans la zone du fond du récipient, une liaison mécanique complémentaire qui renforce la liaison obtenue par colaminage des feuilles 1 et 2.

On évite ainsi tout risque de "décollage" des feuilles colaminées sous l'effet des cycles répétés de chauffage et de refroidissement du récipient de cuisson.

Par ailleurs, le renforcement de la liaison mécanique obtenue selon l'invention entre les deux feuilles de métaux différents, augmente la résistance à la déformation du fond du récipient.

Bien entendu, l'invention n'est pas limitée à l'exemple que l'on vient de décrire et on peut apporter à celui-ci de nombreuses modifications sans sortir du cadre de l'invention.

## Revendications

1. Procédé pour la fabrication d'un récipient culinaire, dans lequel on emboutit un disque constitué par deux feuilles (1, 2) de métaux ou d'alliages différents colaminées de façon à être en contact direct l'une avec l'autre, caractérisé en ce qu'on réalise sur le disque par frappe à froid dans la zone correspondant au fond (3) extérieur du récipient une série de petites cavités (5) suffisamment profondes pour créer également dans la feuille intérieure (2) des cavités complémentaires (6) dans lesquelles s'engagent les protubérances (8) embouties dans la feuille extérieure (1), après quoi on emboutit le disque pour lui donner la forme du récipient.

2. Récipient culinaire obtenu par le procédé de la revendication 1.

3. Récipient culinaire conforme à la revendication 2, caractérisé en ce que la feuille intérieure (2) est plus épaisse que la feuille extérieure (1).

4. Récipient culinaire conforme à la revendication 3, caractérisé en ce que la feuille intérieure (2) est en métal ou alliage plus mou que celui de la feuille extérieure (1).

5. Récipient culinaire conforme à la revendication 4, caractérisé en ce que la feuille intérieure (2) est en aluminium et la feuille extérieure (1) est en acier inoxydable.

6. Récipient culinaire conforme à l'une des revendications 2 à 5, caractérisé en ce que lesdites cavités (5) sont situées dans une zone centrale du fond (3) du récipient.

7. Récipient culinaire conforme à l'une des revendications 2 à 6, caractérisé en ce que lesdites cavités (5) ont une forme sensiblement cylindrique.

8. Récipient culinaire conforme à l'une des revendications 2 à 6, caractérisé en ce que lesdites cavités (9) ont une forme annulaire.

9. Récipient culinaire conforme à l'une des revendications 2 à 6, caractérisé en ce que lesdites cavités ont la forme de lettres, de chiffres ou de symboles.

## Claims

1. Method of manufacturing a cooking vessel, wherein a disc made up of two sheets (1, 2) of different metals or alloys rolled together so as to be in direct contact with one another is pressed, characterised in that a number of small cavities (5) are formed on the disc by cold stamping in the area corresponding to the outer base (3) of the vessel, the cavities being sufficiently deep to produce complementary cavities (6) in the inner sheet (2) for engagement of protuberances (8) pressed in the outer sheet (1), after which the disc is pressed to give it the shape of the vessel.

2. A cooking vessel obtained by the method of claim 1.

3. A cooking vessel according to claim 1, characterised in that the inner sheet (2) is thicker than the outer sheet (1).

4. A cooking vessel according to claim 3, characterised in that the inner sheet (2) is of softer metal or ally than the outer sheet (1).

5. A cooking vessel according to claim 4, characterised in that the inner sheet (2) is of aluminium and the outer sheet (1) is of stainless steel.

6. A cooking vessel according to any one of claims 2 to 5, characterised in that the said cavities (5) are situated in a central area of the base (3) of the vessel.

7. A cooking vessel according to any of claims 2 to 6, characterised in that the said cavities (5) are substantially cylindrical.

8. A cooking vessel according to any of claims 2 to 6, characterised in that the said cavities (9) are annular.

9. A cooking vessel according to any of claims 2 to 6, characterised in that the said cavities are in the form of letters, numbers or symbols.

## Patentansprüche

1. Verfahren zum Herstellen eines Kochgefäßes, bei dem man eine aus zwei aus unterschiedlichen Metallen oder Legierungen bestehenden Platten (1, 2), die colaminiert sind, so daß sie in unmittelbarem Kontakt miteinander stehen, gebildete Scheibe tiefzieht, dadurch gekennzeichnet, daß man auf der Scheibe durch Kaltstauchen in der dem äußeren Boden (3) des Gefäßes entsprechenden Zone eine Reihe Kleiner Vertiefungen (5) erzeugt, die ausreichend tief sind, um auch in der inneren Platte (2) komplementäre Vertiefungen (6) zu erzeugen, in die die in der äußeren Platte (1) gezogenen Vertiefungen eingreifen, worauf die Scheibe tiefgezogen wird, um ihr die Form des Gefäßes zu geben.

2. Kochgefäß, erhalten durch das Verfahren nach Anspruch 1.

3. Kochgefäß nach Anspruch 2, dadurch gekennzeichnet, daß die innere Platte (2) dicker ist als die äußere Platte (1).

4. Kochgefäß nach Anspruch 3, dadurch gekennzeichnet, daß die innere Platte (2) aus einem weicheren Metall oder einer weicheren Legierung als das bzw. die der äußeren Platte (1) besteht.

5. Kochgefäß nach Anspruch 4, dadurch gekennzeichnet, daß die innere Platte (2) aus Aluminium und die äußere Platte (1) aus rostfreiem Stahl besteht.

6. Kochgefäß nach einem der Ansprüche 2 bis 5, dadurch gekennzeichnet, daß die genannten Vertiefungen (5) sich in einer zentralen Zone des Bodens (3) des Gefäßes befinden.

7. Kochgefäß nach einem der Ansprüche 2 bis 6, dadurch gekennzeichnet, daß die genannten Vertiefungen (5) eine im wesentlichen zylindrische Form haben.

8. Kochgefäß nach einem der Ansprüche 2 bis 6, dadurch gekennzeichnet, daß die genannten Vertiefungen (9) ringförmig sind.

9. Kochgefäß nach einem der Ansprüche 2 bis 6, dadurch gekennzeichnet, daß genannten Vertiefungen die Form von Buchstaben, Ziffern oder Symbolen haben.
